# EUROPEAN PATENT SPECIFICATION

(11) **EP 4 181 508 B1**
(45) Date of publication and mention of the grant of the patent: **31.12.2025**
(21) Application number: 22205514.7
(22) Date of filing: 04.11.2022
(51) Int. Cl.: H04N 7/18, G05D 1/00, B64C 39/02

(54) **SELECTIVE VIDEO ANALYTICS BASED ON CAPTURE LOCATION OF VIDEO**
SELEKTIVE VIDEOANALYTIK AUF BASIS DES ERFASSUNGSORTES VON VIDEO
ANALYSE VIDÉO SÉLECTIVE BASÉE SUR L'EMPLACEMENT DE CAPTURE D'UNE VIDÉO

(30) Priority: 10.11.2021 US 202117523497
(43) Date of publication of application: 17.05.2023
(73) Proprietor: Honeywell International Inc., Charlotte, NC 28202 (US)
(72) Inventor: DIVAKARA, Manjunatha Tumkur, Charlotte, 28202 (US)
(74) Representative: Haseltine Lake Kempner LLP

(56) References cited:
- WO-A1-2017/139282
- US-A1- 2014 140 575
- US-A1- 2018 155 057
- US-A1- 2020 409 376

## Description

### Technical Field

The present disclosure pertains generally to mobile security devices that carry video cameras and more particularly to methods and systems for performing video analytics on video captured by such mobile security devices.

### Background

Mobile devices such as but not limited to drones, smart phones, tablets, and other mobile devices, often carry video cameras that can capture video of a scene. Some mobile devices include a controller that can perform some level of video analytics on the captured video. Mobile devices can often travel in a variety of different environments. For example, a drone can fly in both indoor and outdoor environments, and depending on the current task assigned to the drone, the drone may be looking for different types of security incidences. A need remains for improved methods and systems for performing suitable video analytics on video captured by mobile security devices.

US 2018/155057 A1 discloses a UAV device that is given a target location from which to obtain information on a vehicle. When it reaches this location the UAV captures images and applies some processing to the images to detect the vehicle and its identifier, e.g. number plate. In some embodiment the UAV sends the images to a back-end server and the processing is performed there.

### Summary

The scope of the invention is defined by the appended claims. A surveillance drone is defined in claim 1, a method of performing surveillance is defined in claim 7, and a surveillance system is defined in claim 12.

### Brief Description of the Drawings

The disclosure may be more completely understood in consideration of the following description of various illustrative embodiments of the disclosure in connection with the accompanying drawings, in which:
Figure 1 is a schematic block diagram of an illustrative mobile device;
Figure 2 is a schematic block diagram of an illustrative surveillance system; and
Figure 3 is a flow diagram showing an illustrative method.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

Mobile security devices can be used for surveillance in a variety of different circumstances, both indoors and outdoors. While drones are used as a primary example, the present disclosure is applicable to other forms of mobile security devices including smart phones, tablets and/or any other suitable mobile device with a video camera. For indoors use, drones can be used in any large facility to provide a video camera anywhere that a video camera is desired. Drones can have standard patrol patterns, for example, although if there is an incident or suspected incident within a particular location that does not have fixed video cameras, or has limited video camera coverage, additional drones can be instructed to proceed to the particular location in order to provide additional video coverage of the incident. The drones may be instructed to proceed to the particular location by a centralized security system controller, for example, or the drones may communicate with each other and may independently decide where they should fly.

Indoor facilities that can accommodate drones include but are not limited to large facilities such as airport terminals, airplane hangers, manufacturing facilities, parking garages, shopping malls, sporting facilities and the like. For outdoor use, drones can be used to patrol or provide additional video capability to parking lots and traffic surveillance for roadways, amusement parks, and the like. Drones can also be used outdoors in a temporary fashion, to provide video surveillance capability for temporary events such as parades, demonstrations and protests, for example.

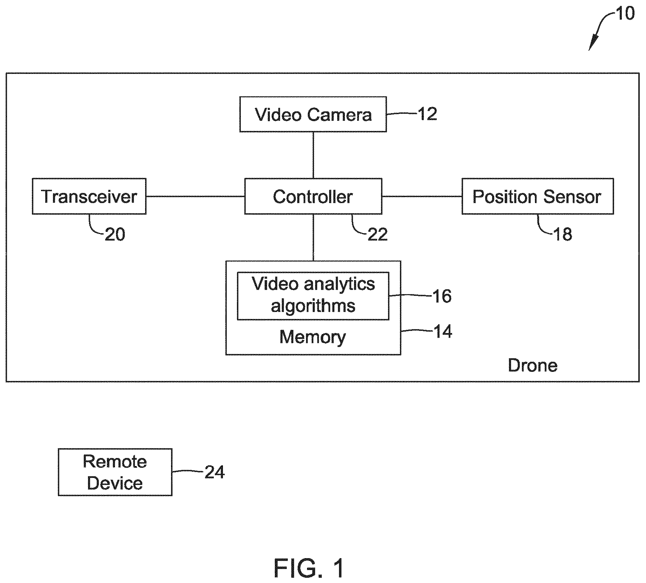

Figure 1 is a schematic block diagram of a mobile security device 10 that may be considered as being configured for either indoor use or outdoor use. In some cases, the mobile security device 10 may be a drone. The illustrative mobile security device 10 includes a video camera 12 that is carried by the mobile security device 10. A memory 14 is configured to store a plurality of video analytics algorithms 16. As will be discussed, one or more video analytics algorithms 16 may be selected for execution, depending on where the mobile security device 10 is at a particular time. The video analytics algorithms 16 include two or more different video analytics algorithms. Example video analytics algorithms can include, but are not limited to, a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm and a license plate detection video analytics algorithm. These are just examples.

The illustrative mobile security device 10 includes a position sensor 18, a transceiver 20 and a controller 22 that is operably coupled to the video camera 12, the memory 14, the position sensor 18 and the transceiver 20. The controller 22 is configured to determine a position of the mobile security device 10 based on information provided by the position sensor 18 and to select one or more video analytics algorithms of the plurality of video analytics algorithms 16 based at least in part upon the determined position of the mobile security device 10.

In some cases, when a single video analytics algorithm is selected based on the position of the mobile security device 10, Table 1 below provide an example correlation between a position or region in a monitored area and a corresponding video analytics algorithm. In Table 1, each position 1, 2, 3, 4, and 5 corresponds to predefined set of coordinates ((x, y, z), (x+ δx, y +δy, z+δz)) in the monitored area. When a video is captured by the mobile security device 10 when the position of the mobile security device 10 falls within one of these sets of coordinates, the corresponding video analytics algorithm is selected and applied to the captured video.

**TABLE 1**

| **Position** | **Video Analytics Algorithm Desired** |
|---|---|
| 1 | People count algorithm |
| 2 | Loitering detection algorithm |
| 3 | Intrusion detection algorithm |
| 4 | Occupancy detection algorithm |
| 5 | Vehicle count algorithm |

In Table 1, when the mobile security device 10 falls within the predefined set of coordinates that correspond to position 1, a people count video analytics algorithm is selected. When the mobile security device 10 falls within the predefined set of coordinates that correspond to position 2, a loitering detection video analytics algorithm is selected. When the mobile security device 10 falls within the predefined set of coordinates that correspond to position 3, an intrusion detection video analytics algorithm is selected. When the mobile security device 10 falls within the predefined set of coordinates that correspond to position 4, an occupancy detection video analytics algorithm is selected. When the mobile security device 10 falls within the predefined set of coordinates that correspond to position 5, vehicle count video analytics algorithm is selected.

In some cases, there may be a desire to perform two or more different video analytics algorithms, depending on the position of the mobile security device 10. Table 2 below provides an example of various positions for which performing two or more different video analytics algorithms is desired.

**TABLE 2**

| **Position** | **People count** | **Loitering Detection** | **Intrusion detection** | **Occupancy Detection** | **Vehicle count** |
|---|---|---|---|---|---|
| 1 | Yes | Yes | No | Yes | No |
| 2 | No | Yes | No | No | No |
| 3 | Yes | No | Yes | No | No |
| 4 | No | Yes | No | No | No |
| 5 | Yes | No | No | Yes | Yes |

In some cases, selecting one or more video analytics algorithms may include selecting a single video analytics algorithm out of the plurality of video analytics algorithms 16. In some instances, selecting one or more video analytics algorithms may include selecting two or more different video analytics algorithms out of the plurality of video analytics algorithms 16. In the example shown in Figure 1, the controller 22 is configured to instruct the video camera 12 to capture video. In some cases, the controller 22 is also configured to perform the selected one or more video analytics algorithms on the captured video depending on the current position of the mobile security device 10, resulting in one or more video analytics results. This may include performing one video analytics algorithm, if only one video analytics algorithm was selected. This may include performing two or more video analytics algorithms, either sequentially or simultaneously, if two or more different video analytics algorithms were selected. In some instances, the controller 22 may simply record the location of the mobile security device 10 when the video was captures, and then send the video and the recorded location to a remote device 24, and the remote device 24 selects and performs the video analytics algorithm that correspond to the recorded location. In some cases, the controller 22 may perform one or more video analytics algorithms (e.g. less computationally intensive video analytics algorithms) that correspond to the recorded location, and the remote device may perform additional video analytics algorithms (e.g. more computationally intensive video analytics algorithms) that correspond to the recorded location. In some cases, some video analytics algorithms may be performed on the edge, such as by the controller 22 of the mobile security device 10, and some video analytics algorithms may be performed on the cloud, such as by the remote device 24. These are just examples.

When the controller 22 performs some video analytics algorithms, the controller 22 is configured to transmit one or more of the video analytics results to remote device 24 via the transceiver 20. In some cases, the remote device 24 may be a desktop computer or a cloud-based server. The remote device 24 may be part of a surveillance system control device, for example.

In some cases, the position sensor 18 may be configured to enable the controller 22 to ascertain an indoor position via triangulation. For example, the position sensor 18 may be configured to be able to triangulate between multiple beacons that are disposed within an indoors facility. The position sensor 18 may be configured to use a 5G cellular network to ascertain its position (either indoors or outdoors). In some cases, the position sensor 18 may be configured to triangulate its position using a magnetometer, ultrawide band (UWB) or even BLE (Bluetooth low energy). The position sensor 18 may have access to a floorplan of a facility by communicating with a BIM (building information model) or even a BMS (building management system). For outdoor locations, GPS (global positioning system), triangularization and/or other suitable technique may be used to ascertain position.

In this, position may refer strictly to the physical location of the mobile security device 10. For example, the position of the mobile security device 10 is 5 meters due south of door #14 within the facility. In some cases, position may also take into account the field of view of the video camera 12 of the mobile security device 10. While the mobile security device 10 may currently be 5 meters due south of door #14 within the facility, the video camera 12 may have a field of view that extends westward down hallway #4. In some cases, position can be a combination of physical location and field of view.

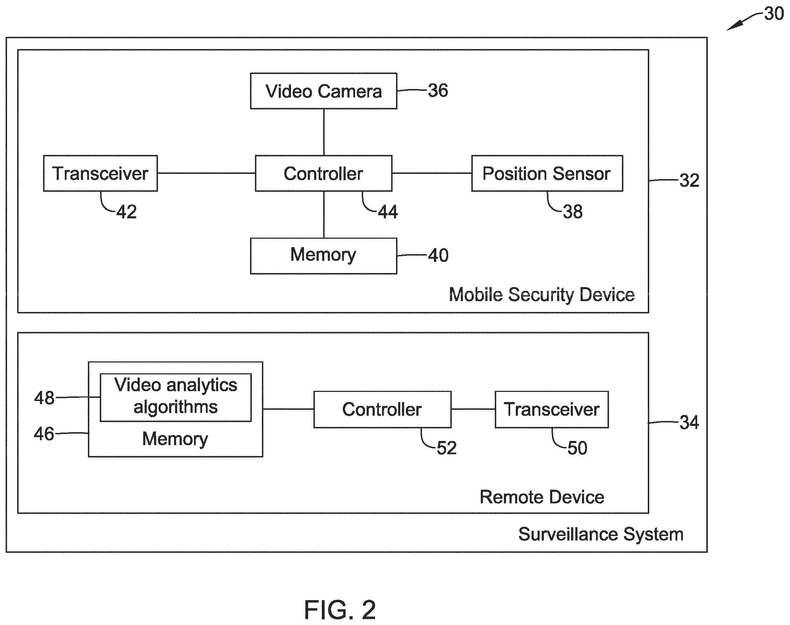

Figure 2 is a schematic block diagram of an illustrative surveillance system 30. The illustrative surveillance system 30 includes a mobile security device 32. In some cases, the surveillance system 30 also includes a remote device 34. In some cases, the remote device 34 may be a desktop computer or a cloud-based server.

The mobile security device 32, which may be configured to fly, includes a video camera 36, a position sensor 38, a memory 40, a transceiver 42 and a controller 44 that is operably coupled to the video camera 36, the position sensor 38, the memory 40 and the transceiver 42. The controller 44 is configured to instruct the video camera 36 to capture video and save the captured video to the memory 40. The controller 44 is configured to determine a position of the mobile security device 32, based on information provided by the position sensor 38, at a time that is representative of when the video camera 36 captured the video. The controller 44 is configured to transmit at least part of the captured video saved in the memory 40 along with the corresponding position.

In some cases, the mobile security device 32 is configured to be carried or even fly indoors, and the position sensor 38 is configured to enable the controller 44 to ascertain its indoors position via triangulation. For example, the position sensor 38 may be configured to be able to triangulate between multiple beacons that are disposed within an indoors facility. The position sensor 38 may be configured to use a 5G cellular network to ascertain its position. In some cases, the position sensor 18 may be configured to triangulate its position using a magnetometer, ultrawide band (UWB) or even BLE (Bluetooth low energy). The position sensor 38 may have access to a floorplan of the facility by communicating with a BIM (building information model) or even a BMS (building management system). For a mobile security device 32 that is configured to fly outdoors, GPS (global positioning system) may be used to ascertain position.

In this, position may refer strictly to the physical location of the mobile security device 32. For example, the position of the mobile security device 32 is 14 meters due north of door #6 within the facility. In some cases, position may also take into account the field of view of the video camera 36. While the mobile security device 32 may currently be 14 meters due north of door #6 within the facility, the video camera 36 may have a field of view that extends into the lobby. In the invention, the position is a combination of physical location and field of view.

In the example shown, the remote device 34 includes a memory 46 that is configured to store a plurality of video analytics algorithms 48. The illustrative remote device 34 includes a transceiver 50 and a controller 52 that is operably coupled with the memory 46 and the transceiver 50. The video analytics algorithms 48 include a number of different video analytics algorithms. The video analytics algorithms may including but are not limited to a people count video analytics algorithm, a crowd detection video analytics algorithm, a loitering detection video analytics algorithm, an intrusion detection video analytics algorithm, a queue length video analytics algorithm, an unidentified object detection video analytics algorithm, an occupancy detection video analytics algorithm, a vehicle detection video analytics algorithm, a vehicle count video analytics algorithm and a license plate detection video analytics algorithm. These are just examples.

The controller 52 of the remote device 34 is configured to receive the at least part of the captured video and the corresponding position transmitted by the mobile security device 32. The controller 52 of the remote device 34 is configured to select one or more video analytics algorithms of the plurality of video analytics algorithms 48 based at least in part upon the received position of the mobile security device 32 and to perform the selected one or more video analytics algorithms on the received captured video, resulting in one or more video analytics results. The controller 52 of the remote device 34 is configured to store the one or more video analytics results.

In some cases, selecting one or more video analytics algorithms includes selecting a single video analytics algorithm out of the plurality of video analytics algorithms 48. In some cases, the remote device 34 is a remote server, and the plurality of video analytics algorithms 48 include one or more of a face detection video analytics algorithm, a facial recognition video analytics algorithm, a mask detection video analytics algorithm, and a walking gate video analytics algorithm.

In some instances, the controller 44 of the mobile security device 32 is configured to select one or more mobile security device video analytics algorithms of a plurality of mobile security device video analytics algorithms based at least in part upon the position of the mobile security device 32. The controller 44 of the remote device 34 may be configured to perform the selected one or more mobile security device video analytics algorithms on the captured video, resulting in one or more video analytics results, and to transmit one or more of the video analytics results to the remote device 34.

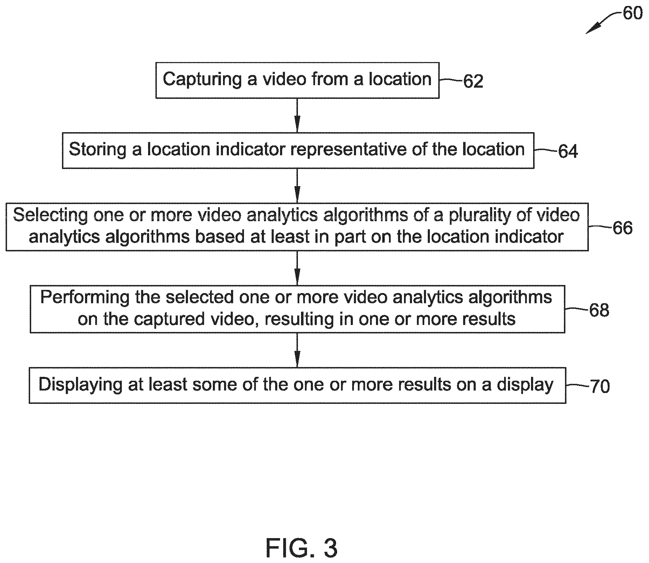

Figure 3 is a flow diagram showing an illustrative method 60 of performing video surveillance. A video is captured from a location, as indicated at block 62. A location indicator representative of the location is stored, as indicated at block 64. One or more video analytics algorithms of a plurality of video analytics algorithms are selected based at least in part on the location indicator, as indicated at block 66. The selected one or more video analytics algorithms are performed on the captured video, resulting in one or more results, as indicated at block 68. At least some of the one or more results are saved and/or displayed on a display, as indicated at block 70.

In some cases, the video is captured by a mobile security device, and at least some of the selected one or more video analytics algorithms are performed by the mobile security device. In some instances, the video is captured by a mobile security device, and the mobile security device is configured to transmit at least part of the captured video and the location indicator to a remote device, and at least some of the selected one or more video analytics algorithms are performed by the remote device.

Those skilled in the art will recognize that the present disclosure may be manifested in a variety of forms other than the specific embodiments described and contemplated herein. Accordingly, departure in form and detail may be made without departing from the scope of the present disclosure as described in the appended claims.

## Claims

1. A drone, comprising:
a video camera carried by the drone;
a memory storing a plurality of video analytics algorithms;
a position sensor;
a transceiver;
a controller operably coupled to the video camera, the memory, the position sensor and the transceiver, the controller configured to:
determine a position of the drone based on information provided by the position sensor, wherein the determined position includes a physical location of the drone and a field of view of the video camera;
select one or more video analytics algorithms from the plurality of video analytics algorithms stored in the memory of the drone by referencing the determined position of the drone into a position-to-video analytic algorithm reference table that links each of various positions of the drone with a corresponding one or more of the plurality of video analytic algorithms;
instruct the video camera to capture video;
perform the selected one or more video analytics algorithms on the captured video, resulting in one or more video analytics results; and
transmit one or more of the video analytics results to a remote device via the transceiver.

2. The drone of claim 1, wherein selecting one or more video analytics algorithms comprises selecting a single video analytics algorithm out of the plurality of video analytics algorithms.

3. The drone of claim 1, wherein:
selecting one or more video analytics algorithms comprises selecting two or more different video analytics algorithms out of the plurality of video analytics algorithms; and
performing the selected two or more video analytics algorithms on the captured video.

4. The drone of claim 1, wherein the plurality of video analytics algorithms comprise two or more of:
a people count video analytics algorithm;
a crowd detection video analytics algorithm;
a loitering detection video analytics algorithm;
an intrusion detection video analytics algorithm;
a queue length video analytics algorithm;
an unidentified object detection video analytics algorithm;
an occupancy detection video analytics algorithm;
a vehicle detection video analytics algorithm;
a vehicle count video analytics algorithm; and
a license plate detection video analytics algorithm.

5. The drone of claim 1, wherein the drone is configured to fly indoors, and the position sensor is configured to enable the controller to ascertain its indoors position via triangulation.

6. The drone of claim 1, wherein the drone is configured to fly outdoors, and the position sensor is configured to enable the controller to ascertain its outdoors position via GPS.

7. A method of performing video surveillance, the method comprising:
capturing a video from a location;
storing a location indicator representative of the location, wherein the location indicator includes both a physical location and a field of view;
selecting one or more video analytics algorithms from a plurality of video analytics algorithms by referencing the location indicator into a position-to-video analytic algorithm reference table that links each of various positions of the drone with a corresponding one or more of the plurality of video analytic algorithms;
performing the selected one or more video analytics algorithms on the captured video, resulting in one or more results; and
displaying at least some of the one or more results on a display.

8. The method of claim 7, wherein the video is captured by a mobile security device, and at least some of the selected one or more video analytics algorithms are performed by the mobile security device.

9. The method of claim 7, wherein the video is captured by a mobile security device, and the mobile security device is configured to transmit at least part of the captured video and the location indicator to a remote device, and at least some of the selected one or more video analytics algorithms are performed by the remote device.

10. The method of claim 7, wherein selecting one or more video analytics algorithms comprises selecting a single video analytics algorithm out of the plurality of video analytics algorithms.

11. The method of claim 7, wherein:
selecting one or more video analytics algorithms comprises selecting two or more different video analytics algorithms out of the plurality of video analytics algorithms; and
performing the selected two or more video analytics algorithms on the captured video.

12. A surveillance system comprising:
a mobile security device including:
a video camera carried by the mobile security device;
a memory;
a position sensor;
a transceiver; and
a controller operably coupled to the video camera, the memory, the position sensor and the transceiver, the controller configured to:
instruct the video camera to capture video and save the captured video to the memory;
determine a position of the mobile security device, based on information provided by the position sensor, at a time that is representative of when the video camera captured the video, wherein the position includes a physical location of the mobile security device and a field of view of the video camera; and
transmit at least part of the captured video saved in the memory along with the corresponding position;
the surveillance system further comprising:
a remote device including:
a memory configured to store a plurality of video analytics algorithms;
a transceiver; and
a controller operably coupled to the memory and the transceiver of the remote device, the controller of the remote device is configured to:
receive the at least part of the captured video and the corresponding position transmitted by the mobile security device;
select one or more video analytics algorithms from the plurality of video analytics algorithms by referencing the received position of the mobile security device into a position-to-video analytic algorithm reference table that links each of various positions of the drone with a corresponding one or more of the plurality of video analytic algorithms;
perform the selected one or more video analytics algorithms on the received captured video, resulting in one or more video analytics results; and
store the one or more video analytics results.

## Patentansprüche

1. Drohne, umfassend:
eine Videokamera, die von der Drohne getragen wird;
einen Speicher, der eine Vielzahl von Videoanalysealgorithmen speichert;
einen Positionssensor;
einen Sender-Empfänger;
eine Steuerung, die betriebsfähig mit der Videokamera, dem Speicher, dem Positionssensor und dem Sender-Empfänger gekoppelt ist, wobei die Steuerung dazu konfiguriert ist:
eine Position der Drohne auf Basis von Informationen zu bestimmen, die von dem Positionssensor bereitgestellt werden, wobei die bestimmte Position einen physischen Ort der Drohne und ein Sichtfeld der Videokamera beinhaltet;
einen oder mehrere Videoanalysealgorithmen aus der Vielzahl von Videoanalysealgorithmen auszuwählen, die in dem Speicher der Drohne gespeichert sind, durch Referenzieren der bestimmten Position der Drohne in einer Position-zu-Video-Analysealgorithmus-Referenztabelle, die jede von verschiedenen Positionen der Drohne mit einem entsprechenden einen oder entsprechenden mehreren der Vielzahl von Videoanalysealgorithmen verknüpft;
die Videokamera anzuweisen, ein Video aufzunehmen;
den ausgewählten einen oder die ausgewählten mehreren Videoanalysealgorithmen an dem aufgenommenen Video durchzuführen, was zu einem oder mehreren Videoanalyseergebnissen führt; und
eines oder mehrere der Videoanalyseergebnisse über den Sender-Empfänger an eine Fernvorrichtung zu senden.

2. Drohne nach Anspruch 1, wobei das Auswählen von einem oder mehreren Videoanalysealgorithmen das Auswählen eines einzelnen Videoanalysealgorithmus aus der Vielzahl von Videoanalysealgorithmen umfasst.

3. Drohne nach Anspruch 1, wobei:
das Auswählen von einem oder mehreren Videoanalysealgorithmen das Auswählen von zwei oder mehreren unterschiedlichen Videoanalysealgorithmen aus der Vielzahl von Videoanalysealgorithmen; und
das Durchführen der ausgewählten zwei oder der ausgewählten mehreren Videoanalysealgorithmen an dem aufgenommenen Video umfasst.

4. Drohne nach Anspruch 1, wobei die Vielzahl von Videoanalysealgorithmen zwei oder mehrere aus Folgendem umfasst:
einen Videoanalysealgorithmus zur Zählung von Personen;
einen Videoanalysealgorithmus zur Erkennung von Menschenmengen;
einen Videoanalysealgorithmus zur Erkennung von Herumlungernden;
einen Videoanalysealgorithmus zur Einbruchserkennung;
einen Warteschlangenlänge-Videoanalysealgorithmus;
einen Videoanalysealgorithmus zur Erkennung von unidentifizierten Objekten;
einen Videoanalysealgorithmus zur Belegungserkennung;
einen Videoanalysealgorithmus zur Fahrzeugerkennung;
einen Videoanalysealgorithmus zur Zählung von Fahrzeugen; und
einen Videoanalysealgorithmus zur Erkennung von Nummernschildern.

5. Drohne nach Anspruch 1, wobei die Drohne dazu konfiguriert ist, in Innenräumen zu fliegen, und der Positionssensor dazu konfiguriert ist, die Steuerung zu befähigen, ihre Innenraumposition über Triangulation zu ermitteln.

6. Drohne nach Anspruch 1, wobei die Drohne dazu konfiguriert ist, im Freien zu fliegen, und der Positionssensor dazu konfiguriert ist, die Steuerung zu befähigen, ihre Position im Freien über GPS zu ermitteln.

7. Verfahren zum Durchführen einer Videoüberwachung, das Verfahren umfassend:
Aufnehmen eines Videos von einem Ort;
Speichern eines Ortsindikators, der für den Ort repräsentativ ist, wobei der Ortsindikator sowohl einen physischen Ort als auch ein Sichtfeld beinhaltet;
Auswählen eines oder mehrerer Videoanalysealgorithmen aus einer Vielzahl von Videoanalysealgorithmen durch Referenzieren des Ortsindikators in einer Position-zu-Video-Analysealgorithmus-Referenztabelle, die jede von verschiedenen Positionen der Drohne mit einem entsprechenden einen oder entsprechenden mehreren der Vielzahl von Videoanalysealgorithmen verknüpft;
Durchführen des ausgewählten einen oder der ausgewählten mehreren Videoanalysealgorithmen an dem aufgenommenen Video, was zu einem oder mehreren Videoanalyseergebnissen führt; und
Anzeigen von mindestens einigen des einen oder der mehreren Ergebnisse auf einer Anzeige.

8. Verfahren nach Anspruch 7, wobei das Video von einer mobilen Sicherheitsvorrichtung aufgenommen wird, und mindestens einige des ausgewählten einen oder der ausgewählten mehreren Videoanalysealgorithmen von der mobilen Sicherheitsvorrichtung durchgeführt werden.

9. Verfahren nach Anspruch 7, wobei das Video von einer mobilen Sicherheitsvorrichtung aufgenommen wird, und die mobile Sicherheitsvorrichtung dazu konfiguriert ist, mindestens einen Teil des aufgenommenen Videos und den Ortsindikator an eine Fernvorrichtung zu senden, und mindestens einige des ausgewählten einen oder der ausgewählten mehreren Videoanalysealgorithmen von der mobilen Fernvorrichtung durchgeführt werden.

10. Verfahren nach Anspruch 7, wobei das Auswählen von einem oder mehreren Videoanalysealgorithmen das Auswählen eines einzelnen Videoanalysealgorithmus aus der Vielzahl von Videoanalysealgorithmen umfasst.

11. Verfahren nach Anspruch 7, wobei:
das Auswählen von einem oder mehreren Videoanalysealgorithmen das Auswählen von zwei oder mehreren unterschiedlichen Videoanalysealgorithmen aus der Vielzahl von Videoanalysealgorithmen; und
das Durchführen der ausgewählten zwei oder der ausgewählten mehreren Videoanalysealgorithmen an dem aufgenommenen Video umfasst.

12. Überwachungssystem, umfassend:
eine mobile Sicherheitsvorrichtung, beinhaltend:
eine Videokamera, die von der mobilen Sicherheitsvorrichtung getragen wird;
einen Speicher;
einen Positionssensor;
einen Sender-Empfänger; und
eine Steuerung, die betriebsfähig mit der Videokamera, dem Speicher, dem Positionssensor und dem Sender-Empfänger gekoppelt ist, wobei die Steuerung dazu konfiguriert ist:
die Videokamera anzuweisen, ein Video aufzunehmen und das aufgenommene Video in dem Speicher zu speichern;
eine Position der mobilen Sicherheitsvorrichtung auf Basis von Informationen, die von dem Positionssensor bereitgestellt werden, zu einem Zeitpunkt, der dafür repräsentativ ist, wann die Videokamera das Video aufgenommen hat, zu bestimmen, wobei die Position einen physischen Ort der mobilen Sicherheitsvorrichtung und ein Sichtfeld der Videokamera beinhaltet; und
mindestens einen Teil des aufgenommenen Videos, das in dem Speicher gespeichert ist, zusammen mit der entsprechenden Position zu senden;
das Überwachungssystem ferner umfassend:
eine Fernvorrichtung, beinhaltend:
einen Speicher, der dazu konfiguriert ist, eine Vielzahl von Videoanalysealgorithmen zu speichern;
einen Sender-Empfänger; und
eine Steuerung, die betriebsfähig mit dem Speicher und dem Sender-Empfänger der Fernvorrichtung gekoppelt ist, wobei die Steuerung der Fernvorrichtung dazu konfiguriert ist:
mindestens einen Teil des aufgenommenen Videos und die entsprechende Position, die von der mobilen Sicherheitsvorrichtung gesendet werden, zu empfangen;
einen oder mehrere Videoanalysealgorithmen aus der Vielzahl von Videoanalysealgorithmen durch Referenzieren der empfangenen Position der mobilen Sicherheitsvorrichtung in einer Position-zu-Video-Analysealgorithmus-Referenztabelle auszuwählen, die jede von verschiedenen Positionen der Drohne mit einem entsprechenden einen oder entsprechenden mehreren der Vielzahl von Videoanalysealgorithmen verknüpft;
den ausgewählten einen oder die ausgewählten mehreren Videoanalysealgorithmen an dem empfangenen aufgenommenen Video durchzuführen, was zu einem oder mehreren Videoanalyseergebnissen führt; und
das eine oder die mehreren Videoanalyseergebnisse zu speichern.

## Revendications

1. Drone comprenant :
une caméra vidéo portée par le drone ;
une mémoire stockant une pluralité d'algorithmes d'analyse vidéo ;
un capteur de position ;
un émetteur-récepteur ;
un contrôleur couplé fonctionnellement à la caméra vidéo, à la mémoire, au capteur de position et à l'émetteur-récepteur, le contrôleur étant configuré pour :
déterminer une position du drone sur la base d'informations fournies par le capteur de position, dans lequel la position déterminée inclut un emplacement physique du drone et un champ de vision de la caméra vidéo ;
sélectionner un ou plusieurs algorithmes d'analyse vidéo parmi la pluralité d'algorithmes d'analyse vidéo stockés dans la mémoire du drone en référençant la position déterminée du drone dans une table de référence d'algorithmes d'analyse position-vidéo qui relie chacune des diverses positions du drone à un ou plusieurs algorithmes d'analyse vidéo correspondants parmi la pluralité d'algorithmes d'analyse vidéo ;
commander à la caméra vidéo de capturer une vidéo ;
exécuter les un ou plusieurs algorithmes d'analyse vidéo sélectionnés sur la vidéo capturée, ce qui donne un ou plusieurs résultats d'analyse vidéo ; et
transmettre un ou plusieurs des résultats d'analyse vidéo à un dispositif distant via l'émetteur-récepteur.

2. Drone selon la revendication 1, dans lequel la sélection d'un ou plusieurs algorithmes d'analyse vidéo comprend la sélection d'un seul algorithme d'analyse vidéo parmi la pluralité d'algorithmes d'analyse vidéo.

3. Drone selon la revendication 1, dans lequel :
la sélection d'un ou plusieurs algorithmes d'analyse vidéo comprend la sélection de deux algorithmes d'analyse vidéo différents ou plus parmi la pluralité d'algorithmes d'analyse vidéo ; et
l'exécution des deux algorithmes d'analyse vidéo sélectionnés ou plus sur la vidéo capturée.

4. Drone selon la revendication 1, dans lequel la pluralité d'algorithmes d'analyse vidéo comprend deux ou plus parmi :
un algorithme d'analyse vidéo de comptage de personnes ;
un algorithme d'analyse vidéo de détection de foule ;
un algorithme d'analyse vidéo de détection de vagabondage ;
un algorithme d'analyse vidéo de détection d'intrusion ;
un algorithme d'analyse vidéo de longueur de file d'attente ;
un algorithme d'analyse vidéo de détection d'objet non identifié ;
un algorithme d'analyse vidéo de détection d'occupation ;
un algorithme d'analyse vidéo de détection de véhicule ;
un algorithme d'analyse vidéo de comptage de véhicules ; et
un algorithme d'analyse vidéo de détection de plaque d'immatriculation.

5. Drone selon la revendication 1, dans lequel le drone est configuré pour voler à l'intérieur, et le capteur de position est configuré pour permettre au contrôleur de déterminer sa position à l'intérieur via une triangulation.

6. Drone selon la revendication 1, dans lequel le drone est configuré pour voler à l'extérieur, et le capteur de position est configuré pour permettre au contrôleur de déterminer sa position à l'extérieur via un GPS.

7. Procédé d'exécution d'une surveillance vidéo, le procédé comprenant :
la capture d'une vidéo à partir d'un emplacement ;
le stockage d'un indicateur d'emplacement représentatif de l'emplacement, dans lequel l'indicateur d'emplacement inclut à la fois un emplacement physique et un champ de vision ;
la sélection d'un ou plusieurs algorithmes d'analyse vidéo parmi une pluralité d'algorithmes d'analyse vidéo en référençant l'indicateur d'emplacement dans une table de référence d'algorithmes d'analyse position-vidéo qui relie chacune des diverses positions du drone à un ou plusieurs algorithmes d'analyse vidéo correspondants parmi la pluralité d'algorithmes d'analyse vidéo ;
l'exécution des un ou plusieurs algorithmes d'analyse vidéo sélectionnés sur la vidéo capturée, donnant un ou plusieurs résultats ; et
l'affichage d'au moins certains des un ou plusieurs résultats sur un affichage.

8. Procédé selon la revendication 7, dans lequel la vidéo est capturée par un dispositif de sécurité mobile, et au moins certains des un ou plusieurs algorithmes d'analyse vidéo sélectionnés sont exécutés par le dispositif de sécurité mobile.

9. Procédé selon la revendication 7, dans lequel la vidéo est capturée par un dispositif de sécurité mobile, et le dispositif de sécurité mobile est configuré pour transmettre au moins une partie de la vidéo capturée et l'indicateur d'emplacement à un dispositif distant, et au moins certains des un ou plusieurs algorithmes d'analyse vidéo sélectionnés sont exécutés par le dispositif distant.

10. Procédé selon la revendication 7, dans lequel la sélection d'un ou de plusieurs algorithmes d'analyse vidéo comprend la sélection d'un seul algorithme d'analyse vidéo parmi la pluralité d'algorithmes d'analyse vidéo.

11. Procédé selon la revendication 7, dans lequel :
la sélection d'un ou plusieurs algorithmes d'analyse vidéo comprend la sélection de deux algorithmes d'analyse vidéo différents ou plus parmi la pluralité d'algorithmes d'analyse vidéo ; et
l'exécution des deux algorithmes d'analyse vidéo sélectionnés ou plus sur la vidéo capturée.

12. Système de surveillance comprenant :
un dispositif de sécurité mobile incluant :
une caméra vidéo portée par le dispositif de sécurité mobile ;
une mémoire ;
un capteur de position ;
un émetteur-récepteur ; et
un contrôleur couplé fonctionnellement à la caméra vidéo, à la mémoire, au capteur de position et à l'émetteur-récepteur, le contrôleur étant configuré pour :
commander à la caméra vidéo de capturer une vidéo et de sauvegarder la vidéo capturée dans la mémoire ;
déterminer une position du dispositif de sécurité mobile, sur la base d'informations fournies par le capteur de position, à un moment qui est représentatif du moment où la caméra vidéo a capturé la vidéo, dans lequel la position inclut un emplacement physique du dispositif de sécurité mobile et un champ de vision de la caméra vidéo ; et
transmettre au moins une partie de la vidéo capturée sauvegardée dans la mémoire ainsi que la position correspondante ;
le système de surveillance comprenant en outre :
un dispositif distant incluant :
une mémoire configurée pour stocker une pluralité d'algorithmes d'analyse vidéo ;
un émetteur-récepteur ; et
un contrôleur couplé fonctionnellement à la mémoire et à l'émetteur-récepteur du dispositif distant, le contrôleur du dispositif distant est configuré pour :
recevoir la au moins une partie de la vidéo capturée et la position correspondante transmise par le dispositif de sécurité mobile ;
sélectionner un ou plusieurs algorithmes d'analyse vidéo parmi la pluralité d'algorithmes d'analyse vidéo en référençant la position reçue du dispositif de sécurité mobile dans une table de référence d'algorithmes d'analyse position-vidéo qui relie chacune des diverses positions du drone à un ou plusieurs algorithmes d'analyse vidéo correspondants parmi la pluralité d'algorithmes d'analyse vidéo ;
exécuter les un ou plusieurs algorithmes d'analyse vidéo sélectionnés sur la vidéo capturée reçue, ce qui donne un ou plusieurs résultats d'analyse vidéo ; et
stocker les un ou plusieurs résultats d'analyse vidéo.
